# EUROPÄISCHE PATENTSCHRIFT

(11) **EP 0 977 940 B1**
(45) Veröffentlichungstag und Bekanntmachung des Hinweises auf die Patenterteilung: **12.09.2001**
(21) Anmeldenummer: 98930631.1
(22) Anmeldetag: 08.04.1998
(51) Int. Cl.: F02C 7/052, B64D 33/02

(54) **LUFTANSAUGSYSTEM FÜR EINE GASTURBINE**
AIR INTAKE SYSTEM FOR A GAS TURBINE ENGINE
SYSTEME D'ASPIRATION D'AIR POUR TURBINE A GAZ

(30) Priorität: 21.04.1997 DE 19716696
(43) Veröffentlichungstag der Anmeldung: 09.02.2000
(73) Patentinhaber: SIEMENS AKTIENGESELLSCHAFT, 80333 München (DE)
(72) Erfinder: EBERLE, Heinz, D-91056 Erlangen (DE); LOEPER, Thomas, D-91054 Erlangen (DE); SCHULZE, Günther, D-90556 Seukendorf (DE)
(86) Internationale Anmeldenummer: DE9801000
(87) Internationale Veröffentlichungsnummer: WO9848160

(56) Entgegenhaltungen:
- DE-A- 3 644 986
- FR-A- 2 210 724
- GB-A- 1 507 914
- US-A- 4 821 520
- MAKANSI JASON: "Advanced inlet-air treatment improves gas-turbine performance" POWER., Bd. 129, Nr. 9, September 1985, Seiten 67-69, XP002075109 NEW YORK US
- "AIR FILTER GUIDE FOR GAS TURBINES" AAF-INTERNATIONAL CATALOGUE MFAS-1-341D, Juni 1994, Seiten 1-12, XP002075112 Louisville, USA

## Beschreibung

Die Erfindung bezieht sich auf ein Luftansaugsystem für eine Gasturbine mit einer einer Filtereinrichtung vorgeordneten Wetterhaube.

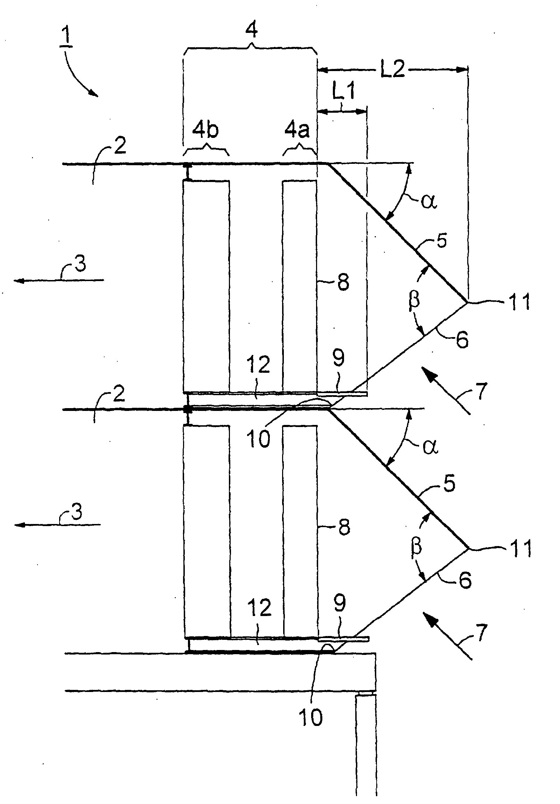

Eine Gasturbine wandelt in Verbindung mit einem Generator die bei der Verbrennung eines fossilen Brennstoffs erzeugte Energie in elektrische Energie um. Dabei wird der Gasturbine die für die Verbrennung des Brennstoffs benötigte Luft über ein Luftansaugsystem zugeführt. Das Luftansaugsystem weist eine Filtereinrichtung auf, um Luftverunreinigungen, die die Gas-turbine beschädigen könnten, aus der angesaugten Luft herauszufiltern. Der Filtereinrichtung einer Gasturbine ist eine Wetterhaube. vorgeordnet, die die Filtereinrichtung vor Wettereinflüssen, z. B. vor Beschädigungen durch Regen, Schnee, Hagel oder Sturm, schützt. Ein Luftansaugsystem für eine Gas-turbine mit einer einer Filtereinrichtung vorgeordneten Wetterhaube ist z. B. bekannt aus "Advanced inlet air treatment improves gas-turbine performance", Power, Bd. 129, Nr. 9, September 1985, Seiten 67-69, XP002075109, New York, US, vgl. Seite 68, Figur 3, und aus "Air filter guide for gas turbines", AAF-International Catalogue MFAS-1-341D, Juni 1994, Seiten 1-12, XP002075112, Louisville, USA, vgl. Seite 11, "UF-H Filter/Silencer".

Eine derartige Wetterhaube beeinflußt jedoch erkanntermaßen die sich im Luftansaugsystem einstellende Geschwindigkeitsverteilung oder das Geschwindigkeitsprofil der Luftströmung in ungünstiger Weise. Dabei können, insbesondere vor der Filtereinrichtung und in vertikaler Richtung, große Geschwindigkeitsunterschiede mit lokal ausgeprägten steilen Gradienten auftreten. Ein entsprechend ungünstiges Geschwindigkeitsprofil der Luftströmung führt zu einer ungleichmäßigen Beaufschlagung der Filtereinrichtung mit Verunreinigungen. Ist der von der Wetterhaube gebildete Luftströmungskanal gegenüber dem sich daran anschließenden Luftleitkanal der Filtereinrichtung geneigt, so wird der Wetterschutz zwar verbessert, jedoch wird das Geschwindigkeitsprofil der angesaugten Luft ungünstig beeinflußt.

Der Erfindung liegt daher die Aufgabe zugrunde, ein Luftansaugsystem für eine Gasturbine derart auszubilden, daß das Geschwindigkeitsprofil der angesaugten Luft möglichst gleichmäßig ist.

Diese Aufgabe wird erfindungsgemäß gelöst durch die Merkmale des Anspruchs 1. Vorteilhafte Ausgestaltungen und Weiterbildungen sind Gegenstand der Ansprüche 2 bis 6.

Für einen besonders effektiven Wetterschutz weist die Wetterhaube gegenüber einem die Filtereinrichtung aufnehmenden Luftleitkanal einen Neigungswinkel α von etwa 45° auf. Dabei kann mit relativ geringem Aufwand die gewünschte Vergleichmäßigung des Geschwindigkeitsprofiles der angesaugten Luftströmung auf der Zuströmseite der Filtereinrichtung bewirkt werden, indem die Luftleiteinrichtung im Bereich eines der Filtereinrichtung nahen Öffnungsrandes der geneigten Wetterhaube angeordnet ist.

Als besonders vorteilhaft hat sich eine Länge der Luftleiteinrichtung von etwa 15% bis 30% der horizontalen Ausdehnung der Wetterhaube herausgestellt. Die horizontale Ausdehnung entspricht dabei im wesentlichen der Länge des Abstandes zwischen der Filtereinrichtung und dem der Filtereinrichtung fernen öffnungsrand der Wetterhaube. Die Luftleiteinrichtung kann z. B. in Form eines Luftleitflügels oder eines Luftleitrohres ausgebildet sein. Besonders kostengünstig und wirkungsvoll ist die Luftleiteinrichtung jedoch als Luftleitblech ausgeführt, das zumindest annähernd horizontal verlaufend ausgerichtet ist. Die Luftleiteinrichtung ist in der Wetterhaube angeordnet, wobei sie zumindest teilweise über den der Filtereinrichtung nahen Öffnungsrand der Wetterhaube hinausragt.

Das Luftansaugsystem umfaßt zweckmäßigerweise zwei übereinander angeordnete und gleichermaßen ausgebildete Luftleitkanäle. Dabei schließt die oder jede Wetterhaube mit deren jeweiliger Öffnungsebene einen Winkel β von (90 ± 15)° ein, so daß die angesaugte Luft stets von schräg unten her in das Luftansaugsystem einströmt.

Die mit der Erfindung erzielten Vorteile bestehen insbesondere darin, daß durch Anordnung einer Luftleiteinrichtung im Luftansaugsystem einer Gasturbine das Geschwindigkeitsprofil der Strömung der angesaugten Luft vergleichmäßigt wird. Eine im Luftansaugsystem vorgesehene Filtereinrichtung wird somit gleichmäßig mit Verunreinigungen beaufschlagt, so daß deren Austauschintervalle verlängert und somit die Betriebskosten reduziert werden können. Des weiteren wird aufgrund der Vergleichmäßigung des Geschwindigkeitsprofils der Luftströmung eine infolge hoher Gschwindigkeitsunterschiede in der Luftströmung verursachte Geräuschemission (Ansauggeräusche) reduziert. Ferner wird durch die gleichmäßige Geschwindigkeitsverteilung die Voraussetzung für eine gleichmäßige Temperaturverteilung bei Warmlufteindüsung innerhalb des Luftansaugsystemes geschaffen. Dadurch wird eine Vereisung der Filtereinrichtung verhindert.

Nachfolgend wird anhand einer Zeichnung ein Ausführungsbeispiel der Erfindung näher erläutert. Darin zeigt die Figur schematisch im Längsschnitt ein Luftansaugsystem einer Gasturbine.

Das Luftansaugsystem 1 umfaßt zwei übereinander angeordnete und gleichermaßen ausgestaltete Luftleit- oder Luftströmungskanäle 2, die in eine nicht näher dargestellte Gasturbine einmünden. Innerhalb jedes Luftleitkanals 2 stellt sich in Strömungsrichtung 3 eine Luftströmung zur Gasturbine hin ein. Dabei wird von der Gasturbine zuvor gefilterte Luft angesaugt. Dazu ist innerhalb jedes Luftleitkanals 2 eine Filtereinrichtung 4 vorgesehen, der eine Wetterhaube 5 vorgeordnet ist. Die Filtereinrichtung 4 umfaßt einen inneren Feinfilter 4b und einen diesem zuströmseitig vorgeschalteten äußeren Grobfilter 4a. Die Filterebene der Filtereinrichtung 4 verläuft vertikal und senkrecht zur Zeichnungsebene.

Die Wetterhaube 5 ist gegenüber dem horizontal verlaufenden Luftleitkanal 2 geneigt angeordnet. Dabei beträgt der Neigungswinkel α der Wetterhaube 5 gegenüber dem Luftleitkanal 2 und damit gegenüber der Horizontalen zweckmäßigerweise etwa 45°. Die Wetterhaube 5 und deren Öffnungsebene 6 schließen einen Öffnungswinkel β von (90 ± 15) ein, so daß die von der Gasturbine angesaugte Luft in Einströmrichtung 7 stets von schräg unten in die Wetterhaube 5 eindringt. Hierdurch kann die Filtereinrichtung 1 besonders gut vor Wettereinflüssen geschützt werden.

Zur Vergleichmäßigung des Geschwindigkeitsprofiles der Strömung der angesaugten Luft entlang der Zuströmseite 8 des Grobfilters 4a und damit innerhalb der Filterebene der Filtereinrichtung 4 weist das Luftansaugsystem 1 in jedem Luftleitkanal 2 eine Luftleiteinrichtung 9 auf. Die Luftleiteinrichtung 9 ist in Strömungsrichtung 3, 7 der angesaugten Luft vor dem Grobfilter 4a und im Bereich des der Filtereinrichtung 4 nahen, inneren Öffnungsrandes 10 der Wetterhaube 5 angeordnet.

Die Luftleiteinrichtung 9 kann hierbei als Luftleitflügel, Luftleitrohr oder besonders vorteilhaft als Luftleitblech ausgeführt sein. Dabei liegt die Länge L1 der Luftleiteinrichtung 9 in Längsrichtung des Luftleitkanals 2 im Bereich von 15% bis 30% der Länge L2 der horizontalen Ausdehnung der Wetterhaube 5. L2 ist auch der Abstand zwischen der Zuströmseite 8 des Grobfilters 4a und dem der Filtereinrichtung 4 fernen, äußeren Öffnungsrand 11 der Wetterhaube 5. Zweckmäßigerweise ist hierbei die Luftleiteinrichtung 9 zumindest annähernd parallel zum Luftleitkanal 2 und senkrecht zur Filtereinrichtung 4 ausgerichtet. Dadurch sind von der Wetterhaube 5 und von in Form von I-Trägern 12 ausgebildeten Filterunterzügen ausgehende ungünstige Beeinflussungen des Geschwindigkeitsprofiles der Luftströmung auf einfache Weise reduziert.

Die Luftleiteinrichtung 9 ist vorteilhafterweise in der Nähe der Filtereinrichtung 4 und innerhalb der Wetterhaube 5 angeordnet, wobei sie den inneren Öffnungsrand 10 zumindest teilweise überragt. Die zweckmäßigerweise als Luftleitblech ausgeführte Luftleiteinrichtung 9 erstreckt sich hierbei horizontal sowie - in Richtung senkrecht zur Zeichenebene - vorzugsweise über die gesamte Breite des Luftleitkanals 2 und somit über die gesamte Breite der Filtereinrichtung 4.

Eine weitere Vergleichmäßigung des Geschwindigkeitsprofils der Luftströmung auf der Zuströmseite 8 der Filtereinrichtung 4 kann dadurch bewirkt werden, daß weitere Luftleiteinrichtungen dem Luftansaugsystem zugeordnet oder in diesem vorgesehen werden.

## Patentansprüche

1. Luftansaugsystem für eine Gasturbine mit einer einer Filtereinrichtung (4) vorgeordneten geneigten Wetterhaube (5),
**dadurch gekennzeichnet**, dass zur Vergleichmäßigung des Geschwindigkeitsprofiles der Luftströmung der Filtereinrichtung (4) eine Luftleiteinrichtung (9) vorgeordnet ist, die im Bereich eines der Filtereinrichtung (4) nahen Öffnungsrandes (10) der Wetterhaube (5) angeordnet ist und zumindest teilweise über diesen hinausragt.

2. Luftansaugsystem nach Anspruch 1,
**dadurch gekennzeichnet**, dass die Wetterhaube (5) und deren Öffnungsebene (6) miteinander einen Winkel β von (90 ± 15)° einschließen.

3. Luftansaugsystem nach Anspruch 1 oder 2,
**dadurch gekennzeichnet**, dass die Länge (L1) der Luftleiteinrichtung (9) 15% bis 30% der Länge (L2) des Abstandes zwischen der Filtereinrichtung (4) und dem der Filtereinrichtung (4) fernen Öffnungsrand (11) der geneigten Wetterhaube (5) beträgt.

4. Luftansaugsystem nach einem der Ansprüche 1 bis 3,
**dadurch gekennzeichnet**, dass die Luftleiteinrichtung (9) als horizontal verlaufendes Luftleitblech ausgebildet ist.

5. Luftansaugsystem nach einem der Ansprüche 1 bis 4,
**dadurch gekennzeichnet**, dass die Wetterhaube (5) gegenüber einem die Filtereinrichtung (4) aufnehmenden Luftleitkanal (2) einen Neigungswinkel α von etwa 45° aufweist.

6. Luftansaugsystem nach einem der Ansprüche 1 bis 5,
**gekennzeichnet durch** zwei übereinander angeordnete und gleichermaßen ausgebildete Luftleitkanäle (2).

7. Gasturbine mit einem Luftansaugsystem nach einem der Ansprüche 1 bis 6.

## Claims

1. Air intake system for a gas turbine, having an inclined weather hood (5) arranged in front of a filter device (4), **characterised in that**, for the evening-out of the velocity profile of the air flow, an air-guiding device (9) is arranged in front of the filter device (4) and in the region of an aperture edge (10), close to the filter device (4), of the weather hood (5) and at least partly projects beyond said aperture edge.

2. Air intake system according to Claim 1, **characterised in that** the weather hood (5) and its aperture plane (6) form an angle ß of (90 ± 15)° with one another.

3. Air intake system according to Claim 1 or 2, **characterised in that** the length (L1) of the air-guiding device (9) is 15% to 30% of the length (L2) of the distance between the filter device (4) and the aperture edge (11), remote from the filter device (4), of the inclined weather hood (5).

4. Air intake system according to one of Claims 1 to 3, **characterised in that** the air-guiding device (9) is designed as a horizontally running air-guiding plate.

5. Air intake system according to one of Claims 1 to 4, **characterised in that** the weather hood (5) has an angle of inclination α of about 45° with respect to an air-guiding channel (2) accommodating the filter device (4).

6. Air intake system according to one of Claims 1 to 5, **characterised by** two air-guiding channels (2) arranged one above the other and of like design.

7. Gas turbine having an air intake system according to one of Claims 1 to 6.

## Revendications

1. Système d'aspiration d'air pour une turbine à gaz, comprenant une hotte (5) pour se protéger des intempéries, qui est inclinée et qui est disposée en amont d'un dispositif (4) de filtration, **caractérisé en ce que**, pour uniformiser le profil de vitesse de l'écoulement d'air, il est monté en amont du dispositif (4) de filtration un dispositif (9) de canalisation de l'air, qui est disposé dans la région d'un bord (10) de l'ouverture de la hotte (5) pour se protéger des intempéries, bord qui est proche du dispositif (4) de filtration, le dispositif (9) de canalisation de l'air faisant au moins partiellement saillie de ce bord.

2. Système d'aspiration d'air suivant la revendication 1, **caractérisé en ce que** la hotte (5) pour se protéger des intempéries et son plan (6) d'ouverture font entre eux un angle β de (90 ± 15)°.

3. Système d'aspiration d'air suivant la revendication 1 ou 2, **caractérisé en ce que** la longueur (L1) du dispositif (9) de canalisation de l'air représente de 15% à 30% de la longueur (L2) de la distance comprise entre le dispositif (4) de filtration et le bord (11) de l'ouverture de la hotte (5) inclinée pour se protéger des intempéries, qui est éloigné du dispositif (4) de filtration.

4. Système d'aspiration d'air suivant l'une des revendications 1 à 3, **caractérisé en ce que** le dispositif (9) de canalisation de l'air est constitué sous la forme d'une chicane s'étendant horizontalement.

5. Système d'aspiration d'air suivant l'une des revendications 1 à 4, **caractérisé en ce que** la hotte (5) pour se protéger des intempéries a un angle α d'inclinaison d'environ 45° par rapport à un canal (2) de canalisation de l'air recevant le dispositif (4) de filtration.

6. Système d'aspiration d'air suivant l'une des revendications 1 à 5, **caractérisé par** deux canaux (2) de canalisation de l'air superposés et constitués de la même façon.

7. Turbine à gaz ayant un système d'aspiration d'air suivant l'une des revendications 1 à 6.
